# EUROPEAN PATENT SPECIFICATION

(11) **EP 0 555 895 B1**
(45) Date of publication and mention of the grant of the patent: **05.07.2000**
(21) Application number: 93200107.6
(22) Date of filing: 15.01.1993
(51) Int. Cl.: A01J 7/00

(54) **An implement for milking animals**
Vorrichtung zum Melken von Tieren
Dispositif de traite d'animaux

(30) Priority: 17.01.1992 NL 9200091
(43) Date of publication of application: 18.08.1993
(73) Proprietor: MAASLAND N.V., 3155 PD Maasland (NL)
(72) Inventor: van der Lely, Cornelis, CH-6300 Zug (CH); van der Lely, Ary, NL-3155 PD Maasland (NL)
(74) Representative: Corten, Maurice Jean F.M.

(56) References cited:
- EP-A- 0 221 733
- EP-A- 0 360 354
- AU-B- 464 891
- FR-A- 2 183 609
- US-A- 2 613 636

## Description

The invention relates to an implement according to the preamble of claim 1.

Such an implement is known from FR-A-2183609. The robot arm described in this document comprises two robot arm portions which are arranged perpendicular to each other, so that a first robot arm portion during milking or connecting of the teat cups to the teats is situated on the longitudinal direction of the milking box. The teat cups are arranged near the end of the first robot arm portion, while the horizontal shaft, around which the complete robot arm can be pivoted is arranged near the end of the second robot arm portion.

The above-mentioned implement has the disadvantage that when an animal kicks against the sides of the teat cups, a bending moment is exerted on the horizontal shaft of the robot arm. A further disadvantage is that the, robot arm comprises two robot arm portions, which increases the possibility that the animal hits the robot arm.

AU-A-464891 relates to an implement which comprises a holder, an arm and a milker to which the teat cups are attached. Both arm and milker can be positioned independently of each other to move the teat cups close to the udder. This construction has the disadvantage that the additional milker requires a lot of space under the animal which prevents the milker from being moved in the vicinity of the udder. Also, the construction unnecessarily is complicated.

US-A-2613636 relates to an implement which comprises a bowl attached to a first arm, which first arm is attached to a second arm which is attached to a holder. The teat cups are connected to the bowl. This construction has the disadvantage of consisting in two arm portions making the construction complicated and increasing the chances of being damaged by the animal.

The present invention has for its object to overcome the above-mentioned disadvantages. To that effect the teat cups can be uncoupled automatically without human labour when the milk flow from the relevant udder quarters has stopped or has fallen below a predetermined value, said teat cups being disposed on said single arm and said single arm is the only arm between the holder and the teat cups.

For a better understanding of the invention and to show how the same may be carried into effect, reference will now be made, by way of example, to the accompanying drawings, in which:
Figure 1 is a rear view of a milking parlour, provided with a semi-automatic milking implement, and
Figure 2 is, to a different scale, a schematic plan view of the milking implement of Figure 1.

In the drawings, corresponding components have been given the same reference numerals. The invention is in no way limited to the embodiments illustrated and described here; they only serve as an illustration of the inventive idea.

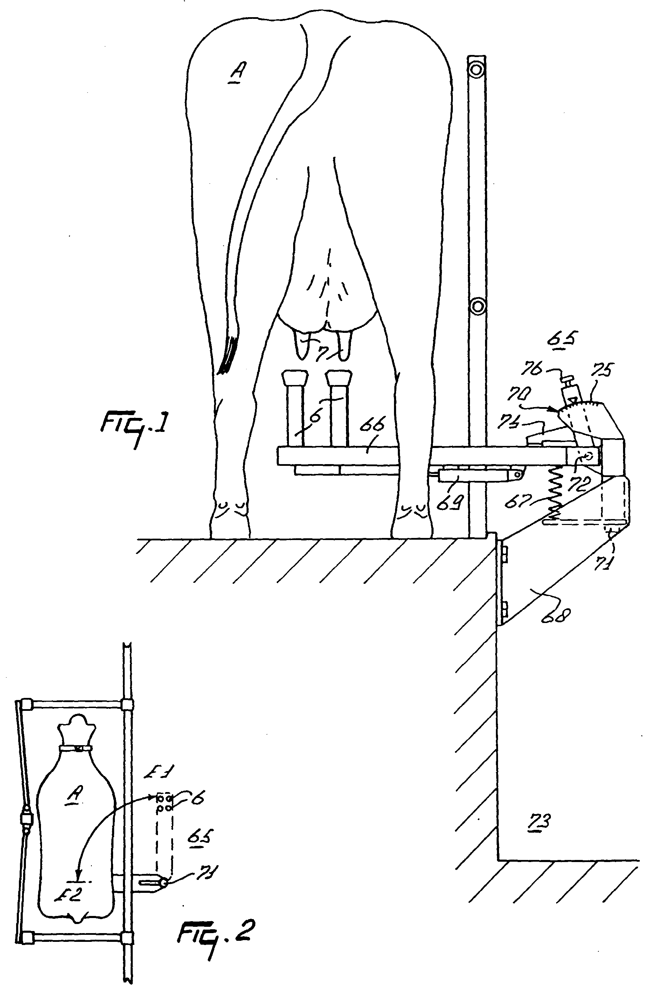

Figure 1 is a rear view and Figure 2 a reduced plan view of the milking parlour, in which a manually operated milking machine 65 is provided against the wall of an operator's pit 73. In this situation, the teat cups 6 are disposed on an approximately horizontally extending arm 66 which is movable in all directions. The arm 66 is upwardly pivotal about a shaft and is flexibly attached to a holder 68 by means of a pusher spring 67 bearing thereon. Because of this support, the teat cups 6 are easily couplable to the teats 7. When a teat 7 does not produce milk any more, the under-pressure in the relevant teat cup 6 will be automatically stopped. This promotes a low somatic cell count of the milk and the risk of mastitis is reduced.

The pneumatic cylinders 69 which uncouple the teat cups 6 from the teats 7 when the milk flow stops or decreases to below a predetermined preset value, are provided under the horizontal carrier arm 66. The height of the arm 66 carrying the cups 6 is adjustable by means of a locking member 70 which comprises a pressure member 74 and is also pivotal about the shaft 72. The arm 66 is further mounted such that it is rotatable about a vertical shaft 71. As is shown in Figure 2, the arm can be moved from a rest position E1 to an operative position E2. The locking member 70 has a serrated edge 73 which is rigid but can pivot together with the arm 66 about the upwardly extending shaft 71, into which edge a pawl 76 is drawn and locked there by a (non-shown) tension spring. The arm 66 with teat cups 6 is simultaneously locked thereby at the proper height. So as to be able to connect the cups 6 to the teats 7, the arm 66 can be pivoted about the vertical shaft 71 to under the udder in the position E2. Thereafter, if desired, the height can be adapted in a simple manner by lifting the pawl 76, whereafter the pusher spring 67 pushes the arm 66 and the cups 6 upwards. Lowering the arm 66 only requires a light manual prressing of the arm 66. If the arm 66 is at suitable height under the udder, the farmer has both arms free for the connection of the cups 6, whilst the entire connection procedure is significantly less burdening for the farmer than with the milking claws which have been customary sofar. The connecting method as well as the feature that teat cups can be connected with two hands offer a farmer the opportunity of raising his output considerably.

If the teat cups 6, as shown, have been connected during milking in an upwardly directed position to the carrier arm 66, it is not absolutely necessary to uncouple the teat cups 6 from the teat, when the milk flow stops. Without the presence of underpressure in the teat cup, the teat cup 6, while resting on a preferably dish-like seat in a plateau at the end of the arm 66, might remain connected to or near the teat until all four teat cups 6 have ended their milking action.

## Claims

1. An implement for milking animals, comprising a milking machine with one single approximately horizontally extending arm (66) adapted to carry a number of teat cups (6), which single arm (66) is movable in all directions and is rotatable about un upwardly directed axis relative to a holder (68), said holder (68) being in a fixed position in the implement, in which implement the teat cups (6) can be connected to the teats of the animal by hand, while, in order to decrease the weight of the arm (66), the implement is further provided with one or more springs (67), active on the arm (66) in a predominantly vertical direction, and the arm (66) being pivotable around a horizontal shaft (72) relative to the holder (68), characterized in that the teat cups (6) can be uncoupled automatically without human labour when the milk flow from the relevant udder quarters has stopped or has fallen below a predetermined value, said teat cups (6) being disposed on said single arm (66) and in that between the teat cups (6) and the holder (68) said single arm (66) is the only arm present.

2. An implement as claimed in claim 1, characterized in that a locking member (70) is provided to fix the end of the arm (66) with the teat cups (6) in a defined height position under the udder of the animal.

3. An implement as claimed in any one of the preceding claims, characterized in that the holder (68) is mounted in a fixed position near the upper edge of an operator's pit (73).

4. An implement as claimed in any one of the preceding claims, characterized in that four cylinders (69) are provided, mounted to the arm (66), whereby the teat cups (6) can automatically be drawn in an upright position against the arm (66) when the milk flow of the relevant teats has been stopped or has been fallen below to a predetermined value.

5. An implement as claimed in claim 5, characterized in that a cylinder (69) is activated after that a sensor in the relevant teat cup (6) or in the conduit connected thereto has indicated that the milk flow in the teat cup (6) has stopped or has fallen below to a predetermined value and immediately after that the vacuum, used for the milking of the cow is removed.

6. An implement as claimed in any one of the preceding claims, characterized in that signalling means are provided to indicate that the milk flow has stopped or has fallen below to a predetermined value.

## Patentansprüche

1. Vorrichtung zum Melken von Tieren, die eine Melkmaschine mit einem einzelnen, annähernd horizontal ausgerichteten Arm (66) aufweist, der geeignet ist, eine Anzahl von Zitzenbechern (6) zu tragen, wobei der einzelne Arm (66) in allen Richtungen bewegbar und um eine aufwärts gerichtete Achse relativ zu einem Halter (68) drehbar ist, der in fester Lage in der Vorrichtung angeordnet ist, in der die Zitzenbecher (6) manuell an die Zitzen des Tieres anschließbar sind, wobei die Vorrichtung ferner zur Verringerung des Gewichtes des Armes (66) eine oder mehrere Federn (67) aufweist, die in überwiegend vertikaler Richtung an dem Arm (66) angreifen, und wobei der Arm (66) um eine horizontale Achse (72) relativ zu dem Halter (68) schwenkbar ist,
dadurch gekennzeichnet, daß die Zitzenbecher (6) automatisch ohne Eingriff durch das Personal abnehmbar sind, wenn der Milchfluß aus den jeweiligen Eutervierteln versiegt ist oder einen vorgegebenen Wert unterschritten hat, wobei die Zitzenbecher (6) an dem einzelnen Arm (66) angeordnet sind, und daß der einzelne Arm (66) zwischen den Zitzenbechern (6) und dem Halter (68) der einzige vorhandene Arm ist.

2. Vorrichtung nach Anspruch 1,
dadurch gekennzeichnet, daß eine Feststellvorrichtung (70) vorhanden ist, um das Ende des Armes (66) mit den Zitzenbechern (6) in einer bestimmten Höhenlage unter dem Euter des Tieres zu fixieren.

3. Vorrichtung nach einem der vorhergehenden Ansprüche,
dadurch gekennzeichnet, daß der Halter (68) in fester Lage nahe dem oberen Rand einer Arbeitsgrube (73) angeordnet ist.

4. Vorrichtung nach einem der vorhergehenden Ansprüche,
dadurch gekennzeichnet, daß vier Zylinder (69) vorhanden sind, die an dem Arm (66) angeordnet sind, wobei die Zitzenbecher (6) automatisch in eine aufrechte Position gegen den Arm (66) ziehbar sind, wenn der Milchstrom aus den jeweiligen Zitzen versiegt ist oder einen vorgegebenen Wert unterschritten hat.

5. Vorrichtung nach Anspruch 4,
dadurch gekennzeichnet, daß ein Zylinder (69) aktiviert wird, nachdem ein Sensor in dem zugehörigen Zitzenbecher (6) oder in der an ihn angeschlossenen Leitung angezeigt hat, daß der Milchfluß in dem Zitzenbecher (6) versiegt ist oder einen vorgegebenen Wert unterschritten hat, und unmittelbar nachdem das zum Melken der Kuh verwendete Vakuum abgeschaltet worden ist.

6. Vorrichtung nach einem der vorhergehenden Ansprüche,
dadurch gekennzeichnet, daß Anzeigevorrichtungen vorhanden sind, um anzuzeigen, daß der Milchfluß versiegt ist oder einen vorgegebenen Wert unterschritten hat.

## Revendications

1. Installation pour la traite d'animaux, comportant une machine de traite ayant un bras unique s'étendant approximativement horizontalement (66) adapté pour porter plusieurs gobelets trayeurs (6), lequel bras unique (66) peut être déplacé dans toutes les directions et peut tourner autour d'un axe dirigé vers le haut par rapport à un support (68), ledit support (68) étant dans une position fixée dans l'installation, installation dans laquelle les gobelets trayeurs (6) peuvent être connectés aux trayons de l'animal à la main, tandis que pour diminuer le poids du bras (66), l'installation est munie de plus d'un ou plusieurs ressorts (67), agissant sur le bras (66) dans une direction de manière prédominante verticale, et le bras (66) pouvant pivoter autour d'un arbre horizontal (72) par rapport au support (68), caractérisée en ce que les gobelets trayeurs (6) peuvent être séparés automatiquement sans main d'oeuvre humaine lorsque l'écoulement de lait provenant du quart de pis correspondant est arrêté, ou est tombé en dessous d'une valeur prédéterminée, lesdits gobelets trayeurs (6) étant disposés sur ledit bras unique (66) et en ce qu'entre les gobelets trayeurs (6) et le support (68) ledit bras unique (66) est le seul bras présent.

2. Installation selon la revendication 1, caractérisée en ce qu'un élément de verrouillage (70) est fourni pour fixer l'extrémité du bras (66) aux gobelets trayeurs (6) dans une position en hauteur définie sous le pis de l'animal.

3. Installation selon l'une quelconque des revendications précédentes, caractérisée en ce que le support (68) est monté dans une position fixée à proximité du bord supérieur d'une fosse d'opérateur (73).

4. Installation selon l'une quelconque des revendications précédentes, caractérisée en ce que quatre vérins (69) sont fournis, montés sur le bras (66), de sorte que les gobelets trayeurs (6) peuvent être tirés automatiquement dans une position verticale contre le bras (66) lorsque l'écoulement de lait des frayons correspondants est arrêté ou est tombé en dessous d'une valeur prédéterminée.

5. Installation selon la revendication 4, caractérisée en ce qu'un vérin (69) est actionné après qu'un détecter situé dans le gobelet trayeur correspondant (6), ou dans le conduit connecté à celui-ci, ait indiqué que l'écoulement de lait dans le gobelet frayeur (6) est arrêté, ou est tombé en dessous d'une valeur prédéterminée et immédiatement après que le vide, utilisé pour la traite de la vache, ait été supprimé.

6. Installation selon l'une quelconque des revendications précédentes, caractérisée en ce que des moyens de signalisation sont fournis pour indiquer que l'écoulement de lait est arrêté ou est tombé en dessous d'une valeur prédéterminée.
